# EUROPEAN PATENT APPLICATION

(11) **EP 0 891 106 A2**
(43) Date of publication of application: **13.01.1999**
(21) Application number: 98401462.1
(22) Date of filing: 15.06.1998
(51) Int. Cl.: H04Q 3/00

(54) **TRAFFIC GENERATOR**

(30) Priority: 12.07.1997 GB 9714623
(71) Applicant: SCHLUMBERGER TECHNOLOGIES, INC., San Jose, California 95110-1397 (US)
(72) Inventor: Whalley, Howard Stephen, Bournemouth, Dorset BH9 2ST (GB); Scott, Mark Anthony, Corfe Mullen, Dorset BH21 3NE (GB); Hanbury-Brown, Mark, Wimborne, Dorset BH21 4SD (GB)
(74) Representative: Lemoyne, Didier

(57) **Abstract**

An apparatus for testing telecommunications equipment, has a traffic generator for generating traffic for test. The traffic generator comprises a traffic generator controller, which is responsive to call parameters to generate a call attempt job, and a number of finite state machines. Each finite state machine is arranged to be connected to a corresponding subscriber port in the exchange equipment under test. Each finite state machine generates a call activity signal in response to receipt of a call attempt job and receives response signals from the port in use.

## Description

### BACKGROUND OF THE INVENTION

### Field of the Invention

The present invention relates to bulk traffic generators, in particular for emulation of equipment for the test of telephone systems.

A telephone system must undergo system verification in order to ensure that it operates properly. Verification generally requires access, control and analysis of multiple network links (e.g. T1/E1), and subscriber lines (e.g. POTS, ISDN-BRI).

### Description of the Prior Art

In the past, the testing of a local exchange has been carried out using laboratory instruments, which tend to have limited functionality and are of a single tasking nature. In that way, the verification task would become a long and tedious sequential process.

A telecommunications equipment manufacturer normally designs equipment to a predetermined specification, but provides a wide performance range to accommodate national or local operator variations. While that arrangement provides flexibility for service providers, it also imposes tremendous pressure on other manufacturers of auxiliary equipment to customise their equipment to a particular market.

### SUMMARY OF THE INVENTION

It is an object of the present invention to provide apparatus which ameliorates the above identified problems.

According to the present invention, there is provided apparatus for testing telecommunications equipment, the apparatus comprising a call parameter generator, a traffic generator for generating traffic for test, the traffic generator comprising a traffic generator controller, responsive to call parameters generated in the call parameter generator, to generate a call attempt job, and a plurality of finite state machines, each finite state machine being arranged to be connected to a corresponding subscriber port in exchange equipment under test and to generate a call activity signal in response to receipt of a call attempt job, and to receive response signals from said port in use.

Preferably, the apparatus further comprises a protocol processor which is operative to translate call activities generated in a finite state machine into call signals required under the protocol governing the system under test.

The protocol processor may include a national protocol entity which is arranged to translate call activities with respect to country specific signalling behaviour.

The apparatus preferably further comprises a serial data sequencer arranged to generate tones suitable for passing to a system under test in response to call signals translated in the protocol processor, and for receiving tones from a system under test and generating call signals for the protocol processor and thereafter for the finite state machines.

Preferably, each finite state machine has a channel of the serial data sequencer associated therewith.

Preferably, the traffic generator includes a user interface which is suitable to allow a user to program a traffic burst comprising a desired series of call operations to be subjected to the system under test.

The user interface may include a facility for defining a call attempt rate for originating calls. Preferably, the call attempt rate is defined in terms of a statistical distribution.

The call attempt rate may be defined with a profile which varies with time. In one embodiment, the profile represents a light call load with short periods of heavy loading at intervals.

The user interface preferably includes a facility for defining a set of subscriber ID's to be used for originating calls, and a list of subscriber numbers to be dialled. In a preferred embodiment of the invention, the facility allows multiple sets to be defined, each set being assigned a probability of a member of that set being used.

In a preferred embodiment of the invention, the user interface provides a set of default call parameters. The default parameters may be adjustable by the user.

The generator may include memory means operative to make a record of call activity for a selected period of time. In that way, a session of call activity defined by user defined parameters can be repeated. It is desirable that a test should be repeatable.

In a preferred embodiment of the invention, the bulk call generator is operative to originate and to receive a call and to transmit the call via a system under test.

In that case, a call to be generated and received can be defined in terms of the following call parameters, which may be variable:
(1) Delay between receiving dialling tone and dialling;
(2) Delay between receiving a call and answering;
(3) Call hold time;
(4) Which side hangs up first;
(5) If time-outs are to be applied at any stage of the call; and
(6) Time-out length if appropriate.

Preferably, the user can set the above parameters, and the parameters can be variable between calls.

Furthermore, it is preferable that the following call parameters can also be set by a user:
(1) Type of dialling (pulse or DTMF);
(2) Inter digit delay;
(3) Amplitudes of DTMF tones;
(4) Priority criteria in the case of call collision; and
(5) Amplitude of tone for bearer channel continuity check.

The user interface is preferably configured such that the above parameters can be set both in real time and when defining a traffic generation profile prior to commencing a test.

The user interface may include a facility to display the status of each subscriber port of equipment under test. The display of status may be updated periodically. Preferably, the display of status is updated every ten seconds.

The generator preferably includes a facility to include an erroneous signal into a call activity signal transmitted to the system under test.

In that way, the ability of the system under test to deal with error instructions can be assessed by "negative" testing.

### BRIEF DESCRIPTION OF THE DRAWINGS

Further aspects and advantages of the invention will be apparent from the following description of a specific embodiment of apparatus in accordance with the invention with reference to the accompanying drawings, in which:
Figure 1 shows a block diagram of a bulk traffic generator of a specific embodiment of the invention;
Figure 2 shows a block diagram of a traffic generator subsystem embedded within the bulk traffic generator illustrated in figure 1;
Figure 3 shows a block diagram of a protocol processor embedded within the bulk traffic generator illustrated in figure 1; and
Figure 4 shows a block diagram of a tone generator/detector module of a serial data sequencer subsystem embedded within the bulk traffic generator illustrated in figure 1.

### DETAILED DESCRIPTION

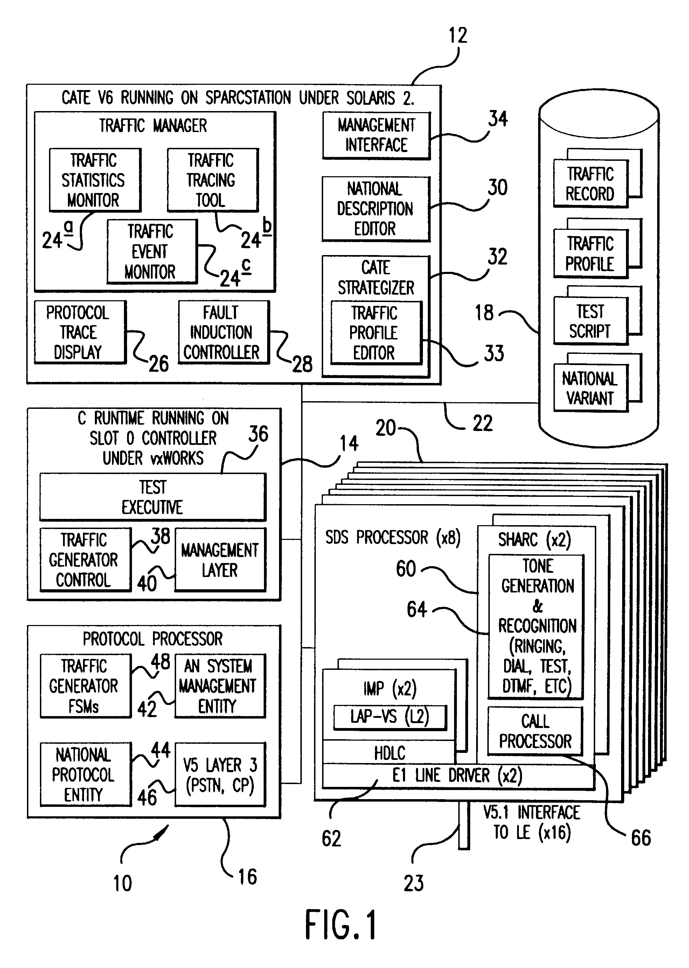

In figure 1, a bulk traffic generator 10 is shown, comprising a central controller 12, a runtime subsystem 14, a protocol processor 16, memory 18 and a serial data sequencer (SDS) processor 20, which are all connected to each other by a common interface 22.

The SDS processor 20 is connected via a series of interface ports 23 to a local exchange (LE) under test. For the sake of clarity, the LE under test is not illustrated in figure 1.

The central controller 12 comprises a traffic manager 24, a protocol trace display module 26, a fault induction controller 28, a national description editor 30 and a CATE strategiser 32. The central controller 12 also includes a management interface 34.

The traffic manager 24 comprises a traffic statistics monitor 24a, a traffic tracing tool 24b and a traffic event monitor 24c.

The runtime subsystem 14 includes a test executive module 36, a traffic generator control module 38 and a management layer 40.

The protocol processor 16 includes an access network (AN) system management entity 42, a national protocol entity 44, and a V5 protocol entity 46. Furthermore, the protocol processor 16 embodies a plurality of finite state machines (FSM) 48. Each supports a user port of the bulk traffic generator 10.

Together, the management layer 40 and the management entity 42 incorporate a management agent.

The memory 18 comprises files for storage of traffic records, traffic profiles, test scripts and national protocol variants.

The central controller 12 and the runtime subsystem 14 are generally implemented by software. For example, the CATE v6 package running on a National Instruments CPU030 VXI Slot-O controller is able to run ANSI C language test software. Such software could be created graphically on a Sun workstation.

The CATE strategiser 32 comprises a traffic profile editor 33. The traffic profile editor 33 is a graphical programming facility which allows the user to set up lists of user ports, call parameters and telephone numbers in order to define a period of call activity known as a traffic burst.

Such traffic bursts may be defined singly, or be constructed into a larger test script defined in the strategiser 32.

A test script can consist of one or more traffic bursts, each of which is graphically represented by an icon in the CATE strategiser 32. The strategiser 32 allows declaration and calling of functions and control structures, such as IF THEN ELSE structures, REPEAT and WHILE loops, and switch constructs.

A traffic burst is made up of one or more groups of calls, each group being defined as a number of calls on a set of user ports to a set of destination telephone numbers with a specified time distribution.

The traffic profile editor 33 provides a table into which details of each group may be entered. The details to be stored in the table are:
the number of call attempts to be made within the group;
a port list comprising a list of port idenetifiers or ranges of port identifiers;
a destination list comprising a list of identifiers, each identifying a telephone directory, i.e. a list of telephone numbers to be used;
a parameter set identifier which defines the set of call parameters to be used with the group;
a relative start time, at which time relative to the start of the traffic burst, the first call attempt will be started; and
a call rate, at which rate call attempts will be made.

The parameter set identifier can be omitted from a group, in which case a set of default call parameters is used instead.

The traffic generator will use the data in the table described above to generate calls when the test script is executed. Port numbers and destination telephone numbers are selected from the lists provided in the table using a selection algorithm. One such algorithm provides for random selection.

Having prepared a test script in the graphical programming interface of the CATE strategiser 32, the user must build the script into an executable program for the CPU030 processor. The script consists of blocks of underlying C code and the script is then compiled in a known manner to produce a traffic profile.

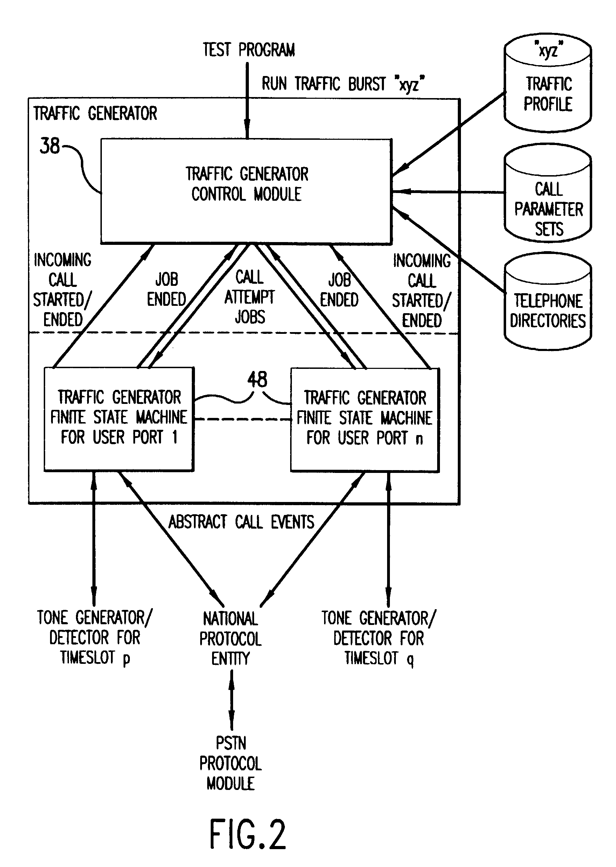

The traffic generator subsystem illustrated in figure 2 is responsible for "running" a traffic burst in real time. It consists of two parts, a number of modules which are defined in several areas of the generator subsystems described above.

The traffic generator subsystem comprises the traffic generator control module 38 of the runtime subsystem 14 and the FSM's 48 ofthe protocol processor 16. Only two FSM's 48 are illustrated in figure 2 for reasons of clarity.

The traffic generator control module 38 has access to the memory 18 and other external software sources, from which it can access traffic profiles, call parameter sets and telephone directories.

The control module 38 interprets the profile parameters (for example call rate, user ports to use) and generates Call Attempt Jobs. Each Call Attempt Job consists of a specification of originating user port, subscriber number to dial and call parameter set.

Each Call Attempt Job is passed to the FSM 48 for the appropriate user port which is responsible for running it. When it has completed (either successfully or with an error), the FSM will send a "job ended" event back to the control module 38.

The FSM's 48 are also operative to send messages to the control module 38 to tell it when a terminating call starts and ends. These messages are used for two purposes.

Firstly, the control module 38 will keep statistics concerning the number of calls made (outgoing and terminating) and the outcomes of those calls (by error type). These statistics will be used by the statistics monitor 24a of the traffic manager 24.

Secondly, the control module 38 will maintain a data structure showing whether each user port is currently in use for a call. It will not generate jobs involving user ports which are currently in use.

The FSM's 48 control the progress of a call. They are defined in terms of Abstract Call Events such as "off-hook" or "wait for dial tone", and control both call originating and call terminating behaviour. Aspects of the behaviour of an FSM, such as delays or timeouts are defined by the Call Parameter Set for the user port associated With that FSM. Each FSM 48 includes switches to force abort of the call attempt at all stages, and other "error" behaviour occurring in negative testing.

The traffic generator control module 38 runs as an independent software task within the cpu030, so that on a test program reset it is not aborted immediately, but can clean up the current call attempts properly before finishing.

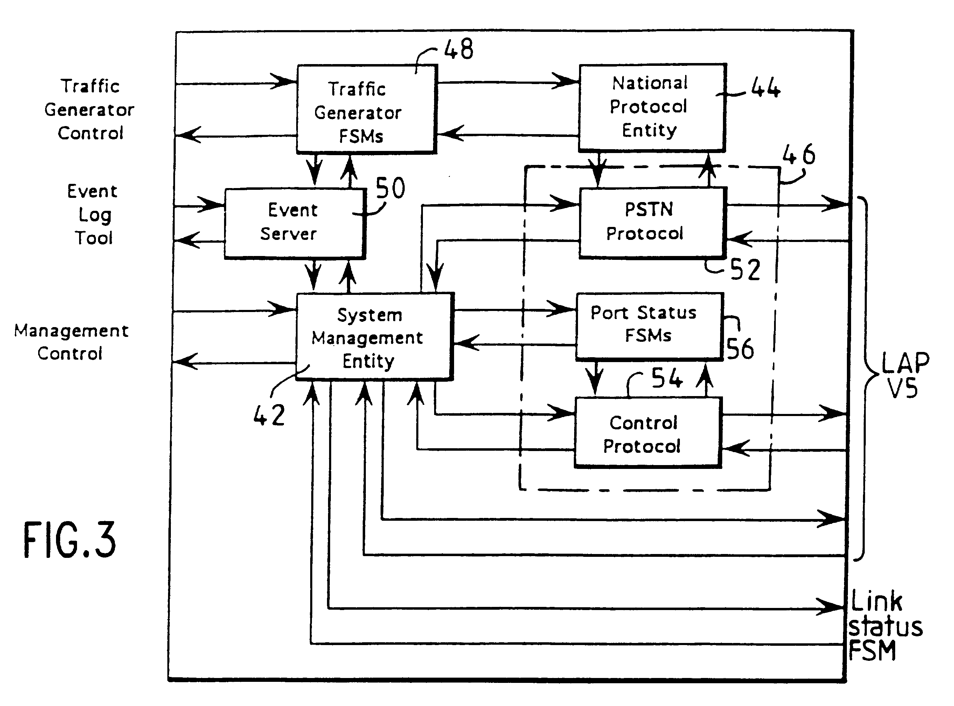

The protocol processor 16 illustrated in figure 1 is illustrated in further detail in figure 3. The modules previously described are given the same reference numerals as before. Furthermore, the protocol processor 16 includes an event server 50.

The V5 protocol entity 46 is divided into three sections, namely a public switched telephone network (PSTN) protocol 52, a control protocol 54, and a plurality of port status FSM's 56 maintained by the control protocol.

Each of the three sections of the V5 protocol entity is in communication with the system management entity 42.

The PSTN protocol 52 and the control protocol 54 maintain an FSM for each user port.

In normal operation, the traffic generator subsystem uses the services provided by the PSTN protocol module (via the national protocol entity) for signalling.

The management agent manages the configuration data required by the embedded modules, i.e. the v5 interfaces, the protocol entities 44, 46, and SDS and call processors 20. It also handles a set of access functions for the modification and manipulation of the data.

Furthermore, the system management entity 42 provides procedural control of the v5 interfaces, such as interface startup, shutdown, restart, re-provisioning and local port blocking and unblocking. These procedures operate on and/or modify the data structures, and are invoked via the access functions mentioned above.

The system management entity 42 provides a graphical user interface (GUI) for easy examination and manipulation of the management data structures.

A large amount of configuration data is required. This data is put into one of three categories for better organisation and representation to the user.

Firstly, pre-defined data have fixed values in the entity software and are not changed by a user. Some values may be alterable by a local management interface.

Secondly, provisioned data have values which need to be initialised before an interface can be started or a port brought into service, but which will not be altered while the relevant ports and interfaces are in service.

It should be noted that this definition of "provisioned" data is wider than that under ETSI (European Telecommunications Standards Institute) guidelines.

Provisioned data are specified via a workstation GUI and can be saved to file as a provisioning data set, which would be labelled with a provisioning variant ID. This ID value is verified with the LE under test during v5 interface startup.

A runtime function, which can be called from a test script, is provided and which loads the data file into the structures on the embedded systems.

Thirdly, programmable data have values which can be modified interactively or by a test script command while the system is active.

Programmable data values may be changed either via an interactive mode on the abovementioned workstation GUI, or by function calls from a test script. Procedures may also be invoked interactively or by test script. The GUI will allow a user to interrogate the current state of any data structures interactively, but any changes to "provisionable" values must be confirmed by SAVEing to file and reprovisioning as discussed above.

The management interface 34 illustrated in figure 1 as being embedded in the central controller 12 is associated with the AN system management entity 42. The management entity 42 controls the provisioning of AN emulation, and allows the user to perform operations system functions.

The management interface 34 includes v5 interface control, protocol configuration, and supervisory tone configuration sections.

The v5 interface control section controls aspects of the physical layer links, provisioning verification and startup of the interface, communications channel assignments and user port configuration.

The protocol configuration section allows the user to configure the timer values for the PSTN and control protocol entities in the protocol processor.

The supervisory tone configuration section provides for configuration control over tone processing elements with the local exchange under test. The configurable parameters relate to the "send" and "receive" levels of single or multiple frequency in-band signals such as dial tone, ringing tone, busy tone, continuity test tones and DTMF digits. These parameters are common to all tone generators in the system.

The Serial Data Sequencer (SDS) subsystem 20 comprises a series of eight SDS processors 58. Each processor 58 comprises two SHARC processors 60, two E1 line drivers 62, and layer 2 protocol modules for the v5 interface with the rest of the system.

Accordingly, the SDS subsystem 20 supports sixteen E1 line drivers 62 in the v5.1 interface 23 to the local exchange under test.

The two SHARCs 60 each include tone generator detector modules 64 and a call processor 66.

The call processor supports the sending of buffers, which may contain tones or any other waveform. A buffer can be sent for a specified amount of time (by specifying a repeat count), after which the module will revert to sending "default data", which in this case should be defined as the A-law quiet code, corresponding to no signal on an E1 timeslot.

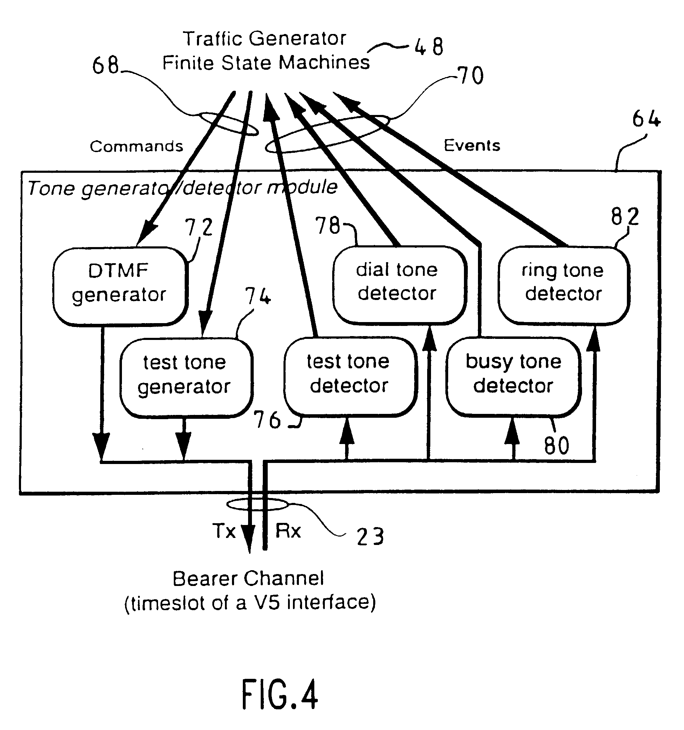

The tone generator/detector modules, as is illustrated in figure 4, correspond one-to-one with the timeslots of the v5 interface with the local exchange under test. Each module 64 is responsive to commands 68 sent from the traffic generator FSM's 48 and is operative to send events 70 to the FSM's 48.

Each tone generator/detector module 64 comprises a dual tone multiple frequency (DTMF) generator 72, and a test tone generator 74, each responsive to commands 68 sent from the FSM's 48. The generators 72, 74 are operative to send signals to the respective timeslot of the v5 interface 23 with which the module 64 is associated.

Each tone generator/detector module 64 also comprises a test tone detector 76, a dial tone detector 78, a busy tone detector 80 and a ring tone detector 82. The detectors are responsive to activity on the respective timeslot on the v5 interface 23, and cause events 70 corresponding to those activities to be sent to the traffic generator FSM's 48.

The test tone generator 74 and the test tone detector 76 are operative to test the continuity of a bearer channel during the speech phase of a call, by sending a test tone through the local exchange under test, and monitoring the form of the test tone when it emerges from the local exchange. In that technique, it is clearly necessary for the bulk call generator to establish both sides of a call with the LE under test in between.

In the central controller 12 of the system described above, various functions are provided which increase the versatility of the system.

The traffic tracing tool 24b allows the user of the system to specify conditions which, when satisfied, will cause traffic generation to be stopped or suspended.

The conditions can be specified in terms of user port identifiers, event types and numbers of occurrences, so that a condition could be set up which specified that traffic generation should be stopped when x occurrences of event y have occurred on port number z.

It is possible to specify lists of ports to be monitored for occurrences of the event of interest. A store of conditions which could be met to cause suspension of traffic generation can be built up. The store of conditions is most conveniently made in a tabular manner.

The traffic event monitor 24c records the activity of the traffic generator FSM's 48. This tool can be used to analyse failures or anomalous behaviour. Each event is marked with a 1 ms resolution timestamp, and the port identifier (layer 3 address) of the PSTN user port to which it relates. Filtering capabilities will be provided which support either detailed analysis of the activity present on a limited range of user ports, or a limited range of events (e.g. error conditions) on all ports during an extended simulation session.

The following events from the traffic generator can be logged by the traffic event monitor 24c:
call origination (off hook, subscriber A);
call termination (incoming call, subscriber B);
call connection (speech phase entered);
call completion (transition from CONNECTED to IDLE, subscriber A or B);
pulse digit sent;
DTMF digit sent;
dial tone detection;
ringing tone detection;
busy tone detection;
unavailable tone detection;
continuity test passed; and
start burst / end burst.

The following events are counted as errors:
call fail (busy tone);
call fail (unavailable tone);
call routing timeout;
no dial tone;
no answer from subscriber B; and
continuity test fail.

The traffic statistics monitor 24a maintains a count of key traffic generator events. The monitor 24a sets up a display which can be user interactive to provide options for configuration of the monitor 24a. The display displays the results of the monitoring, and is updated every 10 seconds during a traffic simulation session.

The fault induction controller 28 is operative to introduce, under control, various error conditions into the system, in order to allow "negative testing" of the LE under test.

The generator is operative to generate traffic at the v5 interface, which is useful in incorporating the generator into a system with other telephonic equipment inorder that performance tests and verification may be carried out.

## Claims

1. Apparatus for testing telecommunications equipment, the apparatus comprising a traffic generator for generating traffic for test, the traffic generator comprising a traffic generator controller, responsive to call parameters, to generate a call attempt job, and a plurality of finite state machines, each finite state machine being arranged to be connected to a corresponding subscriber port in exchange equipment under test and to generate a call activity signal in response to receipt of a call attempt job, and to receive response signals from said port in use.

2. Apparatus according to claim 1 and comprising a protocol processor which is operative to translate call activities generated in a finite state machine into call signals required under the protocol governing the system under test.

3. Apparatus according to claim 2 in which the protocol processor includes a national protocol entity which is arranged to translate call activities with respect to country specific signalling behaviour.

4. Apparatus according to any preceding claim and comprising a serial data sequencer arranged to generate tones suitable for passing to a system under test in response to call signals translated in the protocol processor, and for receiving tones from a system under test and generating call signals for the protocol processor and thereafter for the finite state machines.

5. Apparatus according to claim 4 wherein each finite state machine has a channel of the serial data sequencer associated therewith.

6. Apparatus according to any preceding claim in which the traffic generator includes a user interface which is suitable to allow a user to program a traffic burst comprising a desired series of call operations to be subjected to the system under test.

7. Apparatus according to claim 6 in which the user interface includes a facility for defining a call attempt rate for originating calls.

8. Apparatus according to claim 7 in which the call attempt rate is defined in terms of a statistical distribution.

9. Apparatus according to claim 7 or claim 8 in which the call attempt rate is defined with a profile which varies with time.

10. Apparatus according to claim 9 in which the profile represents a light call load with short periods of heavy loading at intervals.

11. Apparatus according to any one of claims 6 to 10 in which the user interface includes an ID and number defining facility for defining a set of subscriber IDs to be used for originating calls, and a list of subscriber numbers to be dialled.

12. Apparatus according to claim 11 in which the ID and number defining facility allows multiple sets to be defined, each set being assigned a probability of a member of that set being used.

13. Apparatus according to any one of claims 6 to 12 in which the user interface provides a set of default call parameters.

14. Apparatus according to claim 13 in which the default parameters are adjustable.

15. Apparatus according to any one of claims 6 to 14 wherein the user interface is configured such that the call parameters can be set both in real time and when defining a traffic generation profile prior to commencing a test.

16. Apparatus according to any one of claims 6 to 15 wherein the user interface includes a facility to display the status of each subscriber port of equipment under test.

17. Apparatus according to claim 16 wherein the display of status is updated periodically.

18. Apparatus according to claim 17 wherein the display of status is updated every ten seconds.

19. Apparatus according to any preceding claim including memory means operative to make a record of call activity for a selected period of time.

20. Apparatus according to any preceding claim wherein the apparatus is operative to originate and to receive a call and to transmit the call via a system under test.

21. Apparatus according to claim 20 wherein a call to be generated and received is defined in terms of the following call parameters:
(1) Delay between receiving dialling tone and dialling;
(2) Delay between receiving a call and answering;
(3) Call hold time;
(4) Which side hangs up first;
(5) If time-outs are to be applied at any stage of the call; and
(6) Time-out length if appropriate.

22. Apparatus according to claim 21 wherein the call parameters are variable.

23. Apparatus according to claim 22 wherein the call parameters are settable by a user.

24. Apparatus according to claim 22 or claim 23 wherein the call parameters are variable between calls.

25. Apparatus according to any one of claims 21 to 24 wherein the following call parameters are provided and are settable by a user:
(1) Type of dialling (pulse or DTMF);
(2) Inter digit delay;
(3) Amplitudes of DTMF tones;
(4) Priority criteria in the case of call collision; and
(5) Amplitude of tone for bearer channel continuity check.

26. Apparatus according to any preceding claim including a facility to include an erroneous signal into a call activity signal transmitted to the system under test.
